# EUROPEAN PATENT APPLICATION

(11) **EP 1 911 541 A1**
(43) Date of publication of application: **16.04.2008**
(21) Application number: 06021439.2
(22) Date of filing: 12.10.2006
(51) Int. Cl.: B23K 9/32, B08B 5/02, B08B 9/02, F28G 1/16

(54) **Method and device for cleaning of welding torches using a short time duration stream of gas having a high speed**

(71) Applicant: Linde Aktiengesellschaft, 80807 München (DE)
(72) Inventor: Persson, Kjell-Arne, 192 55 Sollentuna (SE); Svensson, Orvar, 187 45 Täby (SE); Tani, Jorma, 132 46 Saltsjö-Boo (SE)

(57) **Abstract**

The invention relates to a method for removing adhered particles (5) from the contact tip (6) of a welding torch, wherein a short-time duration stream of cleaning gas (7) with a high speed is directed to said contact tip (6).

## Description

The invention relates to a method for removing adhered particles from a surface of a cavity or a tube, especially from the gas nozzle and/or from the contact tip of a welding torch, wherein said cavity or said tube is subjected to a cleaning gas flow. Further, the invention relates to a device for cleaning of a cavity or a tube, especially of the gas nozzle and/or of the contact tip of a welding torch, comprising a cleaning gas nozzle, means for opening the flow of gas through said cleaning gas nozzle and a gas supply system connected to said cleaning gas nozzle.

Welding normally creates spatter during operation. Spatters are small metallic particles, mainly from the filler material, that are thrown out of the weld arc or the weld pool. These spatters are very hot, more or less in melted condition, but will cool down during its flight through the gas shield and air.

In MIG and MAG welding (in the US called GMA or FCA welding), the most common welding method in manufacturing industry, these spatters can cause reduced gas shield with welding defects as results. A certain amount of the spatter will hit the welding torch and adhere to the outer part of the welding torch. These adhered spatters will eventually build a ring of spatters at the outlet of the shielding gas nozzle. Deposit of too much spatter would decrease the outlet orifice, disturb the flow of shielding gas and deteriorate the weld quality. Thus, this part is therefore subject to regular cleaning.

Today removal of spatter is mainly performed by mechanical means. After manual welding, cleaning is carried out by means of a simple brush or a welding nipper. Robotic welding systems are normally equipped with a reamer that automatically removes spatter deposit from the welding torch. Often an anti-spatter agent, for example an oil compound, is used to prevent spatter from adhering to the shielding gas nozzle. This agent is added by spraying it or by dipping the torch in a cup containing the agent.

However, since reaming is abrasive, wear is high and the gas nozzles get consumed. Furthermore, time for cleaning is rather long and the reamer may effect the position of the welding torch so that the tool centre point is lost. Thus, a new calibration of the welding torch is necessary.

Further drawbacks of reaming are:
- High wear of the shielding gas nozzle resulting in that spatter can easier adhere to the nozzle
- Risk that the gas nozzle gets stuck in the reamer which can cause an expensive stop in the production
- The workshop can be covered with an oil film which increases risk for injuries.
- Handling of oil is in general negative for the environment.
- Only shielding gas nozzles with a cylindrical shape can be cleaned.
- Only the shielding gas nozzle is cleaned. Other parts like the contact tip are not cleaned.
- Only spatter is removed. Other coats or films with oil and fume particles are not removed
- Cleaning time is comparatively long, several seconds

There are also known non-mechanical cleaning methods like magnetic cleaning. But that method only works with ferritic materials.

US patent application US 2004/0050834 A1 discloses a method for cleaning welding torches by blasting a mixture of CO₂ pellets or CO₂ snow particles and compressed air against the torch. The CO₂ particles cause the adhered spatter and the torch to quickly cool down sufficient to loosen the spatter from the torch. However, there is the risk that loosened spatter remains inside the welding torch. Further, the production of CO₂ snow from liquid CO₂ is often related to special safety precautions, high costs and some uncertainties. To make certain that the liquid CO₂ is not vapourized precautions must be made regarding pressure and/or temperature in all parts of the supply system.
The fraction of produced CO₂ snow depends on the temperature of saturated CO₂ liquid. Handling of liquid CO₂ demands extra high safety awareness. Costly safety valves must be installed.

It is an object of the present invention to provide an improved method and device for cleaning a surface, in particular a welding torch, a gas nozzle or a contact tip, or a cavity or a tube in general which avoids the above-mentioned drawbacks.

This object is achieved by a method for removing adhered particles from a surface of a cavity or a tube, especially from the gas nozzle and/or from the contact tip of a welding torch, wherein said cavity or said tube is subjected to a cleaning gas flow, which is characterized in that a short-time duration stream of cleaning gas with a high speed is directed to said surface of said cavity or said tube.

The inventive device for cleaning of a cavity or a tube, especially of the gas nozzle and/or of the contact tip of a welding torch, comprising a cleaning gas nozzle, an opening valve and a gas supply system connected to said cleaning gas nozzle, is characterized in that said gas supply system comprises a reservoir with a volume between 0.01 and 1.5 litres placed close to said opening valve.

The terms "cavity" and "tube" shall cover all kinds of tubes, pipes, cavities, hollow sections or holes with or without a bottom.

The term "cleaning" shall include loosening or removing of any kind of undesired particles or substances from a surface.

The inventive cleaning method removes particles adhering to the surface of a tube or of a cavity by using the impact or shockwave from a short duration gas stream with high speed. The invention may be used for cleaning the inner surface of cavities and in particular for cleaning the tip or end of a tube, pipe or lance, preferably for cleaning the tip of a welding torch. Cleaning time is less than 0.5 seconds.

The inventive device may also comprise a system for taking care of the removed particles either by arranging the device so that the speed of the spatter is damped and the spatter falls into a collecting box or by splitting the spatter ring and then collecting the remains in a collecting box.

According to a preferred embodiment said cleaning gas is provided with a pressure of more than 30 bar, preferably more than 45 bar, more preferably more than 55 bar. To maximize the cleaning effect the speed of the cleaning gas should be as high as possible when hitting the particles which shall be removed. This is achieved by providing a high pressure gas which is then expanded to form a high speed cleaning jet. The high pressure gas stream is expanded mainly through a cleaning nozzle wherein the outlet of the cleaning nozzle is at a distance to the cavity that makes said high speed of said cleaning gas possible.

When the cleaning gas is expanded from high pressure to atmospheric pressure the gas is cooled. The resulting low temperature of the cleaning gas helps, to some extent, to loosen any spatter from the tube or cavity.

Preferably, when exiting the cleaning gas nozzle the speed of said cleaning gas is in the order around supersonic for the gas in question, preferably in the range +/- 20% of the sonic speed. More preferred the speed of the cleaning gas is supersonic.

Preferably an industrial gas or gas mixture is used as cleaning gas. The cleaning gas may typically comprise one or more of the following gases: carbon dioxide, nitrogen, argon, helium, nitrogen, oxygen and/or a shielding gas used for welding. It is also possible to use air, like compressed air, as cleaning gas. However, in using air some complications might arise like moisture and any oil content in the air. Therefore, when using air as cleaning gas an additional dryer and an oil separator are preferably used.

Industrial gases are available in gaseous form, for example stored in gas cylinders or bundles at a pressure of typically 200 bar, or in liquid form. When using a compressed industrial gas it can be supplied directly from a gas cylinder without any pressure increasing means. The gas can also be taken from the head space of a tank or storage containing a mix of condensed liquid gas and gas. Further, liquid gas can be vaporized to produce the desired cleaning gas in gaseous form.

Often a low pressure gas supply system already exists at the workplace, for example a supply system for the shielding gas used during welding or a supply system for compressed air. In That case it is preferred to use this already existing pipeline system for delivering the cleaning gas and, if necessary, boosting the pressure to the required high pressure value.

In particular when small tubes or small cavities shall be cleaned the cleaning fluid should be essentially in gaseous form. Preferably only gas is blown to the tube or cavity. If liquid carbon dioxide is expanded a mixture of carbon dioxide gas and carbon dioxide snow will be formed. When blown to the cavity the carbon dioxide snow may deposit on the walls and clog the cavity. In that case the spatter or the impurities might not be totally removed. Further, for achieving best cleaning results the speed of the cleaning gas should be maximized and thus the snow fraction should be minimized. Therefore, it is preferred that at least 95% of the cleaning fluid is in gaseous form. Even more preferred, the gaseous fraction of the cleaning fluid is at least 98% up to 100%.

The gas storage, for example a gas cylinder containing an industrial gas as cleaning gas, is preferably placed close to the cleaning workplace. But it is also possible to have some piping system connected to a distant gas supply, such as bundles or a tank with liquified gas.

Further, already existing gas distribution pipelines may be used for the cleaning gas. Normally such gas distribution pipelines are designed for low pressures between 5 and 20 bar. In that case it is preferable to use a compressor to boost the pressure of the cleaning gas to a preferred pressure of more than 30 bar or even more. The compressor can be placed close to the workplace where the cleaning process is carried out. When several cleaning units or cleaning devices shall be supplied with high pressure cleaning gas the compressor is preferably connected to a buffer which is used as a common gas storage for all or at least some of the cleaning units.

Preferably the cleaning device is designed such that the cleaning gas is blown from outside towards said tube or cavity to be cleaned. In principle, it is also possible to blow the cleaning gas from the inside of the tube, for example of the welding torch, but normally this means that the torch must be redesigned. More preferred the cleaning gas is directed from outside to the center or slightly offside the center of said tube or cavity. The gas stream reaches the back wall or bottom of the cavity, turns inside the cavity or tube and exits along the inner walls of the cavity. In this way the impulse or impact coming from the high-pressure and high speed cleaning gas stream loosens any spatter or impurities from the cavity walls. After turning inside the cavity the cleaning gas will push any loosened spatter out of the cavity.

Preferably, the cleaning gas stream is directed to the central parts of said cavity. It is in particular preferred to direct the cleaning gas stream along or slightly offset the centreline of a symmetric cavity. This can be realized by supplying the cleaning gas stream via a cleaning gas nozzle wherein said cleaning gas nozzle is aligned with, with or without an offset, the symmetry line of a, in principal, symmetrical cavity.

According to a another embodiment the cleaning gas jet is directed to the cavity or tube at an angle to the centreline of the cavity or tube. This is in particular advantageous when cleaning the end of a tube or a nozzle. The angle relative to the centreline should preferably less than 20°.

According to still another embodiment the cleaning gas jet is forced to rotate or vibrate at an angle to the centreline. The outlet of the cleaning gas nozzle describes a movement along a line, circular or oval and the cleaning gas jet thus describes, more or less, a cone. The speed of rotation is related to the cleaning time and is preferably selected to be between 10 and 1000 revolutions per second. The magnitude of said movement is preferably less than 3 diameters of said cleaning gas nozzle. A vibration of the cleaning device or its suspension may for example initiate the rotation. The vibration or rotation may preferably be accomplished by mechanical or electromechanical means.

The inventive cleaning method uses the shockwave of a high speed cleaning gas stream. In particular small cavities are quickly filled with cleaning gas and the pressure inside the cavity increases. As a result the impact of the cleaning gas jet will considerably decrease. Thus the maximum cleaning effect is achieved in the beginning of the cleaning process. Therefore, it is not necessary to blow large amounts of cleaning gas to the tube or cavity. Preferably, a quantity of less than 1,5 liter of high pressure cleaning gas, more preferably less than 0,5 liter cleaning gas, is blown to the cavity. In a preferred embodiment a reservoir with a volume between 0,01 and 1,5 liters is filled with high pressure cleaning gas and said reservoir is then suddenly emptied and directed to said tube. In normal units, the amount of cleaning gas is preferably between 1 and 25 normal litres.

When blowing the cleaning gas from the inside of the cavity or tube the cleaning gas will directly hit the spatter on the surface and in this case no stagnation pressure will be built up in the tube.

The cleaning gas may be heated before blown towards the cavity or tube. This will not negatively affect the cleaning to any major degree.

Instead of emptying a pre-defined reservoir of cleaning gas it is also possible to shut the cleaning gas flow after a certain period of time. The time period corresponds to releasing above mentioned reservoir.

The speed with which the cleaning gas hits the surface to be cleaned changes with cleaning gas flow time. It is important that the initial speed of the cleaning gas is as high as possible. This means that the speed with which the opening valve or any other means for starting the gas flow opens is very important. The opening means should preferably open within less than 0.1 seconds and preferably within less than 0.02 seconds. This improves repeatablitiy and reliability compared to slower valves. The pressure rise of the cleaning gas, at the outlet of the cleaning device, should be fast when starting the cleaning process, preferably faster than 0.1 seconds from the ambient pressure to 90% of the maximum work pressure. The opening means, for example an opening valve, can be triggered either automatically or manually.

The inventive cleaning device comprises a cleaning gas nozzle with an opening valve. As mentioned above it is important that the cleaning gas jet reaches the tube or cavity with high speed. Thus, the length of the cleaning gas nozzle downstream said opening valve should be short in order not to slow down the speed of the cleaning gas. Further, the distance between the outlet opening of the cleaning gas nozzle and the tube or cavity to be cleaned is preferably less than 50 mm, more preferably less than 20 mm, most preferably between 4 and 10 mm. The opening means preferably has an orifice larger or at least with a size in the same order as the cleaning gas nozzle.

It has been found that in some cases the force from the cleaning gas blow is strong enough to activate a anti-collision protection in the welding torch or welding robot. This means that the robot is put on hold, which is not acceptable. To cope with this, it is preferred to position the welding torch in a fork or clamping device fixed to the cleaning device. This means that the torch can not move during cleaning and the anti-collision protection will not be activated.

The invention has several advantages compared to the prior art. The time needed for cleaning welding torches is considerably decreased compared to the prior art methods. The gas consumption for cleaning is very low. Due to that low gas consumption it is possible to design a gas distribution system for the supply of cleaning gas using flexible pipes or tubes with a very small diameter of for example less than 4 mm. Thereby, the pipe installation is considerably facilitated and the related costs are lowered.

The invention is especially used for cleaning of welding torches, especially for cleaning of torches used for GMA-welding or FCA-welding with filler metal either a solid wire, meatal cored wire or flux cored wires. The cleaning device is not only suited for cleaning of mechanised or robotic welding torches but also for manually handled welding torches.

In the following, the invention as well as further details of the invention shall be explained with reference to the enclosed schematic drawing. Herein shows the
figure a welding torch and the inventive cleaning arrangement.

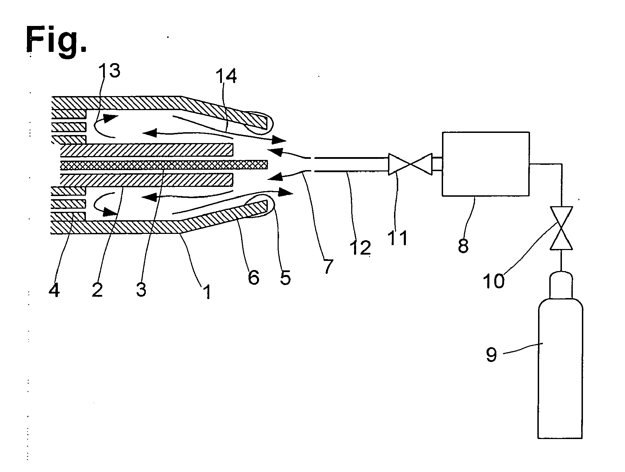

The figure shows a welding torch which is used for shield gas welding. The welding torch comprises a shielding gas nozzle 1, a contact tip 2 with a welding wire or electrode 3. Through shielding gas inlets 4 a shielding gas may be introduced into the shielding gas nozzle 1 in order to create a shielding gas atmosphere during welding.

As described in the introductory part of the specification, during welding spatter 5 will be formed and adhere to the tip 6 of gas nozzle 1. In order to remove the adhered particles (spatter) 5 a high speed gas stream 7 with a short duration is directed to the welding torch.

A reservoir 8 having a volume of for example 0,05 liter is filled with a gas mixture of argon and carbon dioxide from a gas cylinder 9 at a pressure of 55 bar. Valves 10 and 11 are closed. In order to have the speed of the cleaning gas jet 7 as high as possible, valve 11 is opened very fast. The cleaning gas stored in reservoir 8 enters cleaning gas nozzle12 and is then blown into shielding gas nozzle 1. The shockwave generated by the high pressure argon/carbon dioxide gas stream 7 loosens the spatter 5 from the tip 6 of gas nozzle 1. The cleaning gas jet enters the gas nozzle 1, reaches the backside of the gas nozzle 1, turns (13) and exits (14) along the inner walls of gas nozzle 1. Thus any spatter 5 which has been loosened by the shockwave 7 is blown out of the gas nozzle 1 by the exiting argon/carbon dioxide gas stream 14.

According to a preferred embodiment the inventive cleaning system uses standard welding shielding gases, typically argon, carbon dioxide or a mixture of both gases. The cleaning gas pressure is about 55 to 60 bar and the cleaning gas buffer volume is between 0.051 and 0.2 1, preferably less than 0.1 l, for example 0.075 l. The opening of the valve takes less than 0.015 seconds. The time to remove the spatter is also about 0.03 seconds

## Claims

1. Method for removing adhered particles (5) from a surface (6) of a cavity or a tube, especially from the gas nozzle and/or from the contact tip of a welding torch, wherein said cavity or said tube is subjected to a cleaning gas flow (7), **characterized in that** a short-time duration stream of cleaning gas (7) with a high speed is directed to said surface (6) of said cavity or said tube.

2. Method according to claim 1, **characterized in that** said cleaning gas (7) is provided with a pressure of more than 30 bar, preferably more than 45 bar, more preferred more than 55 bar.

3. Method according to claim 1 or 2 **characterized in that** said cleaning gas (7) is supplied via a cleaning gas nozzle (12) and that the speed of said cleaning gas (7) at the outlet of said cleaning gas nozzle (12) is in the order around supersonic for the gas in question.

4. Method according to any of claims 1 to 3, **characterized in that** air or an industrial gas or gas mixture, in particular carbon dioxide, nitrogen, oxygen or a shielding gas used for welding is directed to said cavity or said tube.

5. Method according to any of claims 1 to 4, **characterized in that** said cleaning gas (7) is directed from outside towards said cavity or said tube (6).

6. Method according to any of claims 1 to 5, **characterized in that** said cleaning gas stream (7) is supplied via a cleaning gas nozzle (12) with a diameter less than two thirds of the opening of said cavity or said tube.

7. Method according to any of claims 1 to 6, **characterized in that** a reservoir (8) with a volume between 0.01 and 1.5 litres is filled with high pressure cleaning gas and that said high pressure cleaning gas is suddenly released from said reservoir (8) and directed to said cavity or said tube (6).

8. Method according to any of claims 1 to 7, **characterized in that** said cleaning gas stream (7) is supplied via a cleaning gas nozzle (12) comprising an opening means (11) wherein said opening means (11) open faster than 0.1 seconds, preferably faster than 0.02 seconds.

9. Device for cleaning of a cavity or a tube, especially of the gas nozzle and/or of the contact tip of a welding torch, comprising a cleaning gas nozzle (12), means (11) for opening the flow of gas (7) through said cleaning gas nozzle (12) and a gas supply system (8, 9, 10) connected to said cleaning gas nozzle (12), **characterized in that** said gas supply system comprises a reservoir (8) with a volume between 0.01 and 1.5 litres placed close to said means (11) for opening the flow of gas (7).

10. Device according to claim 9, **characterized in that** said cleaning nozzle (12) has a diameter of less than 10 mm, preferably less than 7 mm.
